# FASCICULE DE BREVET EUROPEEN

(11) **EP 0 367 668 B1**
(45) Date de publication et mention de la délivrance du brevet: **16.02.1994**
(21) Numéro de dépôt: 89402994.1
(22) Date de dépôt: 30.10.1989
(51) Int. Cl.: B60Q 1/06, G05D 3/14

(54) **Dispositif de commande de la position d'au moins un organe mobile, parmi un ensemble de positions discrètes, en particulier pour l'inclinaison d'un projecteur d'un vehicule automobile**
Positionssteuereinrichtung zur Lageregelung eines beweglichen Organs in verschiedene diskrete Stellungen, speziell für die Neigung von Automobilscheinwerfern
Position command device for a movable member in a number of discrete positions, especially for tilting the headlight of a car

(30) Priorité: 03.11.1988 FR 8814317
(43) Date de publication de la demande: 09.05.1990
(73) Titulaire: VALEO ELECTRONIQUE, 92130 Issy-les-Moulineaux (FR)
(72) Inventeur: Iacovella, Rocco, F-94400 Vitry S.Seine (FR); Pedronno, Philippe, F-91100 Corbeil-Essonnes (FR)
(74) Mandataire: Gamonal, Didier

(56) Documents cités:
- FR-A- 2 386 856
- GB-A- 1 459 746
- US-A- 3 789 283
- PATENT ABSTRACTS OF JAPAN, vol. 9, no. 22 (M-22-354)(1745), 30 janvier 1985
- PATENT ABSTRACTS OF JAPAN, vol. 7, no. 275 (M-261)(1420), 8 décembre 1983
- PATENT ABSTRACTS OF JAPAN, vol. 8, no. 274 (M-345)(1711), 14 décembre 1984

## Description

La présente invention concerne un dispositif de commande de la position d'au moins un organe mobile parmi un ensemble de positions discrètes, en particulier pour l'inclinaison d'un projecteur d'un véhicule automobile, du type comprenant une unité de commutation à plusieurs positions discrètes, alimentée par une source de tension, et, de façon associée à le ou les organes mobiles, une unité de positionnement comprenant un moteur à courant continu relié mécaniquement à l'organe mobile et électriquement à l'unité de commutation par un circuit électronique s'étendant dans l'unité de positionnement.

Un tel dispositif est décrit dans l'abrégé en anglais du document JP-A-59-167345, conforme au préambule de la revendication 1. Dans ce document, l'unité de positionnement comporte un commutateur et un générateur récepteur de tensions piloté par un commutateur et un générateur émetteur de tensions à valeurs discrètes, que présente l'unité de commutation, tandis que le moteur est alimenté à partir d'amplificateurs à gain montés en sens inverse. Grâce à ces dispositions, la liaison électrique entre les unités de commutation et de positionnement ne nécessite que trois fils et l'organe mobile peut occuper un grand nombre de positions discrètes.

Néanmoins, un problème se pose, car notamment en matière de projecteur, la réglementation exige que, lorsque le fil de commande est débranché, le dispositif doit agir de telle sorte que le projecteur adopte une orientation basse ou identique.

D'une manière générale, en cas d'avarie du fil de commande, il y a intérêt à ce que l'organe mobile occupe une position déterminée.

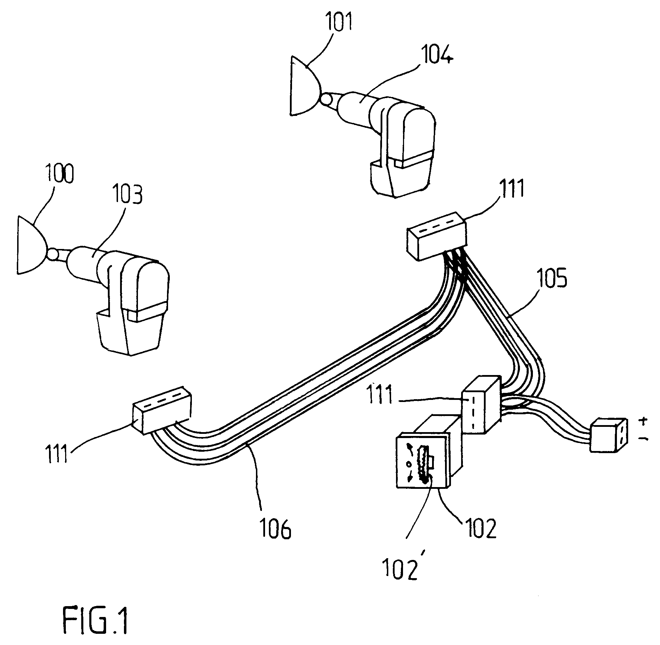

On connaît par ailleurs de par le document GB-A-1 459 746 un dispositif d'asservissement avec au moins un actuateur. Dans une réalisation deux actuateurs sont prévus (figure 1) et la commande s'effectue à partir de deux générateurs de tension et de deux commutateurs reliés mécaniquement entre eux. A chaque position du commutateur correspond un niveau de tension.

Dans le document US-A-3 789 283 le circuit électrique comprend un amplificateur double, un pont diviseur et des potentiomètres de contrôle, de retour et d'informations.

Des diodes sont en outre prévues en cas de panne du dispositif.

La présente invention a pour objet de répondre à cette règlementation sans perdre les avantages du dispositif précité et donc de créer un dispositif maintenant l'organe mobile dans une position prédéterminée en cas d'avarie du fil de commande, tout en ayant une unité de commutation à faible nombre de sorties et sans diminuer le nombre de positions discrètes de l'organe mobile.

La solution de ce problème réside, conformément à l'invention, dans les caractéristiques de la revendication 1.

Grâce à l'invention, si le fil de commande reliant la sortie du commutateur émetteur à l'entrée d'analyse de l'amplificateur concerné est débranché ou coupé, l'organe mobile adoptera, dans le cas d'un projecteur, une position basse ou identique. On appréciera qu'une unité de commutation à trois sorties est suffisante.

On appréciera, que la position fictive du commutateur émetteur correspond à une réelle position de fonctionnement de l'organe mobile.

Selon une autre caractéristique de l'invention, les deux unités de positionnement étant branchés en parallèle, à chaque unité de positionnement est associée une diode d'isolement reliée à la sortie du commutateur émetteur. Ainsi, si l'on souhaite faire fonctionner deux projecteurs avec une seule unité de commutation, la présence d'un ou de deux correcteurs (unité de positionnement) n'influe pas sur la valeur de consigne de l'unité de commutation. Grâce à cette disposition l'impédance de l'unité de commutation n'a pas besoin d'être faible, et celle des unités de positionnement élevée en sorte que les unités de positionnement sont moins sensibles aux phénomènes d'humidité et l'unité de commutation moins sujette à l'échauffement. En cas de débranchement de l'alimentation de l'une des unités de positionnement, l'autre fonctionnera correctement.

La description qui va suivre donne un exemple de réalisation en regard des dessins annexés, selon lesquels :
- La figure 1 représente une vue d'ensemble d'un dispositif de commande de la position de projecteurs d'un véhicule automobile, selon l'invention ;

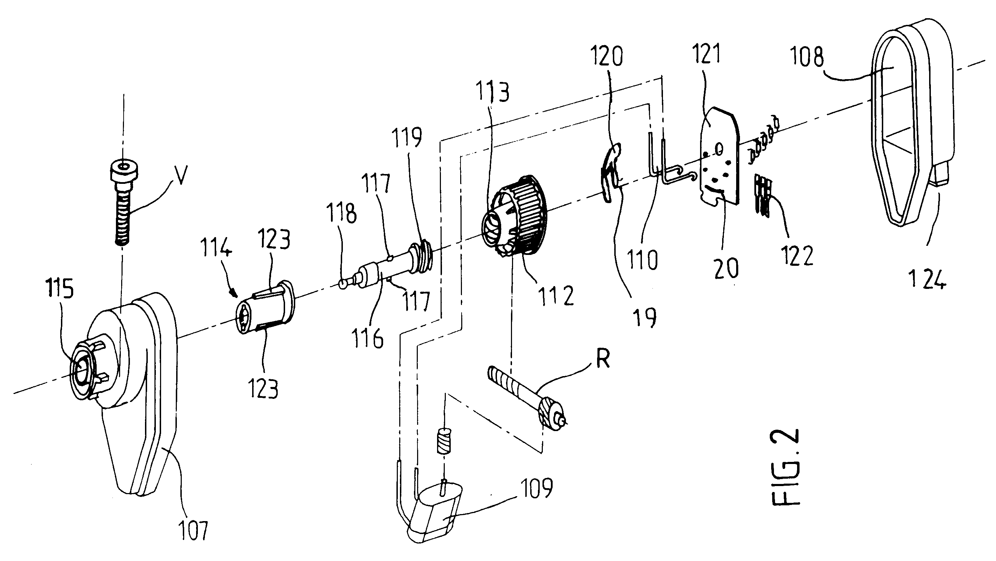

- la figure 2 représente une vue éclatée d'une unité de positionnement, selon l'invention ;
- la figure 3 représente un schéma électronique de commande du moteur électrique à courant continu.

Le dispositif de la figure 1 permet de commander la position d'au moins un organe mobile 116 parmi un ensemble de positions discrètes. Ici, deux organes mobiles 116 sont prévus, chacun étant associé à un projecteur 100,101 d'un véhicule automobile pour commander la position desdits projecteurs en fonction de la charge du véhicule selon l'une des cinq positions prédéterminées ou discrètes. Les projecteurs 100,101 constituent donc également des organes mobiles.

Pour ce faire, une unité de positionnement 103,104 (ou actuateur) à moteur électrique est associée à chacun des projecteurs et l'utilisateur dispose, à l'intérieur de l'habitacle du véhicule, d'une unité de commutation 102 alimentant et commandant chacune desdites unités 103,104.

L'unité de commutation 102, (ou de commande) comporte un organe de manoeuvre, ici sous forme d'une roue rotative de commande saillante 102′, qui est relié fonctionnellement à un commutateur sélectif C à cinq positions stables donnant des valeurs de consigne.

L'unité 102 possède trois sorties 1,2,3 sur lesquelles sont branchés les trois fils d'un faisceau standard 105 de liaison avec l'unité 104.

Les deux unités 103 et 104 sont reliées entre-elles par un faisceau 106 à trois fils.

L'unité de commutation 102 comporte en outre deux entrées d'alimentation reliées respectivement à l'une des bornes d'une source de tension, ici la batterie du véhicule.

Des connecteurs 111 sont prévus pour branchements et liaisons des faisceaux 105 et 106 avec les diverses unités 102, 103 et 104 ainsi qu,avec la batterie (figure 1).

Les deux unités de positionnement 103,104 sont identique entre-elles et comportent chacune un moteur électrique 109 à courant continu logé à l'intérieur d'un boitier, ici en matière plastique, en deux parties 107 et 108 assemblées entre-elles par clipsage.

Le moteur 109 est relié électriquement par des fils 110 à une plaque 121 logée dans la partie 108 et portant une piste, un circuit imprimé, et des composants électroniques selon l'invention, décrits ci-après, nécessaires au fonctionnement de l'ensemble.

Trois broches 122 sont portées par ladite plaque 121 en étant engagées dans une portion saillante 124 de la partie 108.

Ces broches 122 sont reliées à l'unité de commutation 102 par l'intermédiaire du faisceau 105 et des connecteurs 111.

Le moteur est mécaniquement relié au projecteur 101 (ou 100) grâce à une tige mobile 116 (constituant un organe mobile) agissant sur ledit projecteur par l'intermédiaire de leviers (non visible). La tige agit en poussée sur les leviers pour commander ledit projecteur. Bien entendu la tige peut agir en traction sur lesdits leviers.

Le mouvement de rotation du moteur est transformé en mouvement de translation de la tige 116 par un mécanisme.

Plus précisément,le moteur 109 entraine en rotation pas à pas, par l'intermédiaire d'un réducteur R à roue et vis sans fin, une roue 112 comportant un moyeu 113 avec un filet hélicoïdale coopérant avec un filetage 119 de la tige 116, comme décrit dans le document EP-A-0 291 379.

La tige porte deux tétons 117 s'engageant chacun respectivement dans une gorge d'une douille 114 montée dans un alésage de la partie 107.

La douille 114 porte des dentures 123 interrompues pour coopération avec une vis de réglage V traversant la face latérale de la partie 107.

La vis V permet le réglage initial du projecteur, tandis que la tige 116 est déplacable en translation et traverse le nez 115 de la partie 107 pour action par sa rotule sur le projecteur 101.

Suivant une caractéristique de l'invention le circuit électronique de l'unité de positionnement 103 ou 104 est alimenté par la source de tension à partir de deux sorties que présentent l'unité de commutation 102 à cet effet.

Plus précisément, en ne considérant que l'unité de positionnement 104, l'unité de commutation 102 présente trois sorties 1, 2, 3 reliées respectivement à la borne positive de la source de tension continue (ici 12 Volts), à la borne négative de ladite source (la masse) et à une sortie 4 à valeurs discrètes de tension du commutateur C. L'unité de positionnement 104 comporte trois entrées 5, 6, 7, (correspondante chacune à l'une des broches 122) reliées auxdites sorties 1,2,3 par le faisceau 105.

Le commutateur C, dit ici par commodité commutateur émetteur, est un commutateur rotatif à cinq plots de contact 8 à 12 disposés sur une piste électrique et séparés les uns des autres par des zones non conductrices.

Sur cette piste, glisse un curseur conducteur 13 pour établir une liaison électrique entre l'un des plots 8 à 12 et la sortie 4.

Chacun des plots 8 à 11, est raccordé par l'intermédiaire d'une ligne conductrice aux sorties de valeurs discrètes d'un générateur de tensions E à valeurs discrètes, dit ici par commodité générateur émetteur E, en sorte que le cinquième plot 12 n'est relié à aucune sortie de générateur E et constitue un plot fictif suivant une caractéristique de l'invention.
Ledit générateur E est logé, ainsi que le commuteur C, dans l'unité de commutation 102. Le générateur E est ici un pont diviseur de tension à résistances R1 à R5 ; les tensions de sorties étant étagées et discrètes. Ici, les résistances R2 à R4 ont la même valeur, la résistance R1 a globalement une résistance deux fois moindre que celle des résistances R2 à R4, tandis que la résistance R5 a une valeur globalement 4,5 fois plus grande que celle des résistance R2 à R4.

Ainsi, il est possible d'obtenir aux niveaux des points 8 à 11 respectivement une tension de 10,5 V., 9 V., 7,5 V., 6V. A ce générateur E est associé un générateur de tensions G à valeurs discrètes disposé dans l'unité de positionnement 104 et consistant également en un pont diviseur de tension à résistances R6 à R11.

Ce pont diviseur comporte cinq sorties reliées à cinq plots de contact 15 à 18 d'un commutateur rotatif D, dit ici commutateur récepteur, de structure analogue au commutateur C. Ainsi, on voit en 19 le curseur et en 20 la sortie du commutateur D reliée au curseur. Le générateur G sera dénomé ici par commodité générateur récepteur.

Ici, pour que les tensions aux points 18, 17, 16, 15 soient du même ordre de grandeur que les tensions aux points 8 à 11 on donne aux résistances R6 à R9 globalement la même valeur qu'aux résistance R2 à R4 tandis que la valeur de la résistance R10 est le triple de la valeur desdites résistances R2 à R4. Les deux ponts diviseurs E,G sont donc à l'image l'un de l'autre, le pont E pilotant le pont G.

Alors que le curseur 13 est relié à l'organe 102', le curseur 19 est lui relié par une liaison mécanique 21 au moteur 109 en étant entrainé par celui-ci. Cette liaison 21 comporte la roue 112, qui entraine en rotation une pièce 120 portant le curseur 19 amené à coopérer avec les plots de contact portés par la plaque 121. On notera que la pièce 120 porte un deuxième doigts plus long pour contact avec un secteur annulaire constituant le point 20. Ce secteur conducteur est concentrique aux plots 14 à 18 en étant situé sur une plus grande circonférence.
Le moteur est alimenté à partir d'amplificateurs différentiels 24, 25 à gain limité ou fixe montés en sens inverse et possédant chacun une entrée d'analyse respectivement 26, et 20, lesdites entrées 26, 20 étant reliées respectivement à la sortie 4, par l'intermédiaire d'une diode 30 décrite ci-après, du commutateur émetteur C et à la sortie 20 du commutateur récepteur D. Chaque borne d'alimentation 22, 23 du moteur 109 est reliée à la sortie de l'un des amplificateurs 24,25, ici sous forme d'amplificateurs opérationnels.

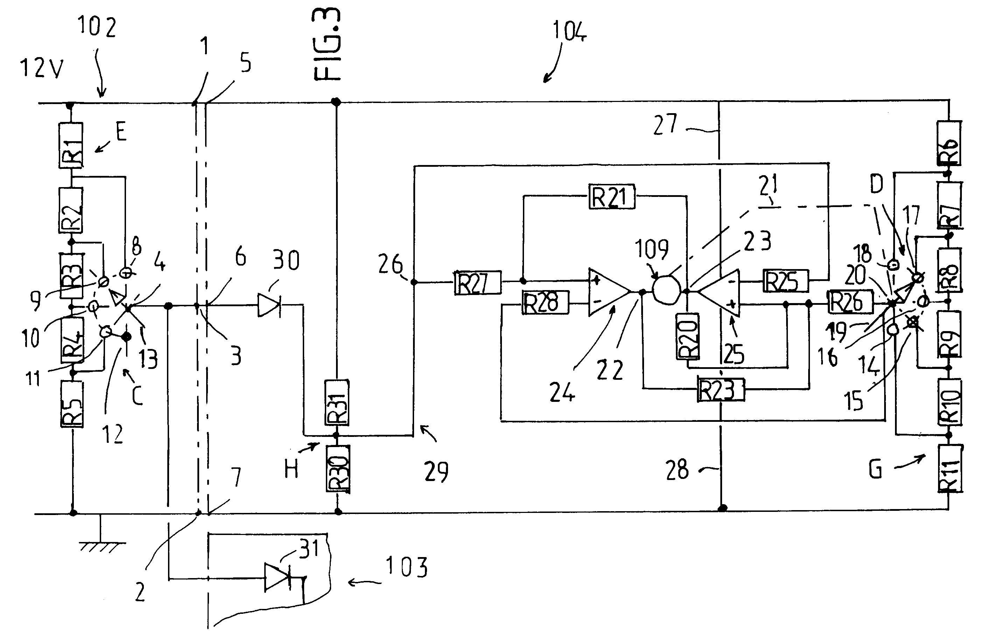

L'entrée non inverseuse de l'amplificateur 24 est alimentée à partir de la sortie 4 du commutateur C, tandis que l'entrée non inverseuse de l'amplificateur 25 est alimentée à partir de la sortie 20 du commutateur D. A chaque amplificateur 24,25 sont associées des résistances, d'une part, R27, R21, R28 et, d'autre part, R20, R25, R26, R23 comme visible à la figure 3. La résistance R25 branchée sur l'entrée inverseuse de l'amplificateur 25 est reliée à l'entrée d'analyse 26 de l'amplificateur 24, tandis que la résistance R28 branchée sur l'entrée inverseuse del'amplificateur 24 est reliée à l'entrée d'analyse 20 de l'amplificateur 25. Ces amplificateurs sont logés dans l'unité de positionnement 104 et sont, reliés par des lignes 27 et 28, tout comme le générateur récepteur G aux bornes de la source de tension.

Ainsi, lorsque la position du curseur 13 est différente de celle du curseur 19 par exemple, lorsque l'on déplace le curseur 13 sur le point 10 tandis que le curseur 19 reste sur le point 17, les amplificateurs 24, 25 du fait du déséquilibre, alimentent le moteur par des tensions complémentaires, celui-ci pouvant tourner ainsi dans les deux sens selon la valeur des tensions en 22 et 23.

Pour que le moteur ne s'arrête pas lorsque le curseur 19 se déplace entre deux plots, des résistances R23 et R20 sont prévues pour mémoriser le sens de rotation dudit moteur 109. Ici, la résistance R23 relie l'entrée non inverseuse de l'amplificateur 25 à la borne 22 tandis que la résistance R20 relie ladite entrée non inverseuse à la borne 23.

Les résistances R27,R21, déterminent le gain de l'amplificateur 24, tandis que les résistances R26,R23 R20, déterminent le gain de l'amplificateur 25. Le point d'analyse 26 est relié, d'une part, au point 4 à travers la diode 30 et, d'autre part, à l'entrée des résistances R27, R25, tandis que le point d'analyse 20 est relié, d'une part, à l'entrée R26 et, d'autre part, à la résistance R28.

Les résistances R28 et R25 constituent des résistances de protection tandis que les résistances R20, R23, R21 permettent de générer une hystérésis assurant une bonne stabilité des positions d'arrêt.

Les résistances R20 à R28 ont des valeurs beaucoup plus grandes que celles des résistances R1 à R11. Par exemple, si la résistance R3 est de l'ordre de 100 ohms celle de la résistance R25 est de l'ordre de 4,7 K ohms. Suivant une caractéristique de l'invention, un générateur de tension de référence H est monté dans la ligne d'alimentation 29 allant de la sortie 4 du commutateur C à l'entrée d'analyse 26 de l'amplificateur 24. Ce générateur est monté dans l'unité 104 et génère une tension de référence pour la valeur fictive de la sortie 4 (curseur 13 sur plot 12) correspondant à une position réelle de sécurité du projecteur.

Ici, ce générateur auxiliaire H consiste en un pont diviseur à résistance R31 et R30 montées respectivement entre la borne positive de la source et entre la ligne 29 et entre la ligne 29 et la borne négative de la source de tension.

Le commutateur C est à cinq positions, mais l'une est fictive (plot 12) tandis que le commutateur D est à cinq positions réelles. Celà est due au fait que le générateur E génère quatre valeurs de sorties discrètes de tension, tandis que le générateur G génère cinq valeurs de sorties discrètes de tension.
Lorsque le curseur 13 est sur le plot 12, la tension au point 26 est déterminée par le pont de référence H et le pont diviseur G possède, suivant une caractéristique importante, une résistance R11 supplémentaire pour qu'en position d'arrêt du moteur (potentiel identique aux bornes 22 et 23), la tension au point 14 soit identique à celle au point 26. Ici, la valeur de R11 a été choisie identique à celle de R9, tandis que la résistance R31 à été choisie globalement deux fois plus grande que R9 et la résistance R30 dix fois plus petite. Ainsi, il est possible d'obtenir une tension de 1,5 V. au point 14.

On notera que la position fictive du commutateur correspond à une position réelle du projecteur celui-ci adoptant alors une position (ou orientation) basse grâce au dispositif interne auxiliaire à générateur H et à résistance supplémentaire R11. Lorsque le fil est débranché au point 3 celà n'a aucune importance, le projecteur se dirigeant alors vers sa position basse de sécurité conformément aux exigences de la réglementation. Les unités de positionnement 103, 104 sont montées en parallèle et pour éviter qu'une unité perturbe l'autre lorsque par exemple l'unité 103 est débranchée on prévoit des diodes 30, 31 d'isolement dans les lignes d'alimentation 29 entre le générateur de tension H et le point 4.
Dans tous les cas par action sur l'organe de commande 102' du commutateur C on déplace le curseur 13, ce qui détruit l'équilibre des tensions aux bornes 22 et 23 et entraîne la rotation du moteur 109 dans un sens ou dans l'autre suivant les cas jusqu'à ce que le curseur 19 est atteint une nouvelle position correspondant à un équilibre aux bornes 22 et 23.
Ainsi qu'il ressort à l'évidence de la description, il est possible d'augmenter le nombre de positions du projecteur en augmentant le nombre de sortie des générateurs E et G, ainsi que le nombre des positions des commutateurs C, D. On appréciera que dans tous les cas le dispositif ne fait appel qu'à des faisceaux standard à trois fils pour relier l'unité de commutation soit directement, soit indirectement aux unités de positionnement 103 et 104.
Lorsque la tige 116 agit en tirant sur le projecteur concerné il suffit d'augmenter la tension de référence du générateur de tension de référence H pour obtenir non pas le potentiel le plus bas par rapport aux niveaux des sorties des générateurs E et G mais, le potentiel le plus haut par rapport auxdites sorties.
D'une manière générale dans le cas ou la position de sécurité doit être contraire à celle décrite ci-dessus, c'est le plot 8 qui est fictif, la tension au point de jonction des résistances R31, R30 avec la ligne 29 correspondant à la tension au point 18 du générateur G. La diode 30 est montée en sens inverse dans ce cas.

Bien entendu, la présente invention n'est pas limitée aux exemples de réalisation décrits. En particulier l'organe de commande 102' peut être à déplacement linéaire. Le générateur émetteur peut être du type digital, ledit générateur pouvant ne comporter qu'une seule sortie qui prend des valeurs discrètes de tension conformément à une table logique. Le dispositif peut permettre de commander la position d'un volet d'une installation de chauffage et de climatisation par exemple pour véhicules automobiles. De même l'invention s'applique aux motocyclettes ayant qu'un seul projecteur.

Enfin, la sortie 4 du commutateur C peut être reliée à la sortie 3 de l'unité 102 par une résistance ou analogue.

## Revendications

1. Dispositif de commande de la position d'au moins un organe mobile (116) parmi un ensemble de positions discrètes, en particulier pour l'inclinaison d'un projecteur (100,101) d'un véhicule automobile, du type comprenant une unité de commutation (102), à plusieurs positions discrètes et à trois sorties, alimentée par une source de tension et, de façon associée à le ou lesdits organes mobile (116), une unité de positionnement (103, 104) comprenant un moteur à courant continu (109) relié mécaniquement à l'organe mobile (116) et électriquement à l'unité de commutation (102) par un circuit électronique s'étendant dans l'unité de positionnement (103,104), ledit circuit électronique comportant un commutateur récepteur (D), doté d'une sortie (20), associé à un générateur récepteur de tensions (G) alimenté par la source de tension à partir de deux sorties (1,2) de l'unité de commutation (102), tandis que l'unité de commutation (102) présente un commutateur émetteur (C), doté d'une sortie (4) à valeurs discrètes de tension associé à un générateur émetteur de tensions (E) à valeurs discrètes alimenté par la source de tension, dispositif dans lequel la sortie (4) du commutateur émetteur (C) est reliée à la troisième sortie (3) de l'unité de commutation (10) elle-même reliée à la sorte (20) du commutateur récepteur (D) par un circuit électrique comprenant, dans l'unité de positionnement (103,104), deux amplificateurs différentiels (24,25) à gain montés en sens inverse et possédant chacun une entrée d'analyse (26,20) reliée à l'autre amplificateur pour alimenter le moteur (109), lesdites sorties d'analyse (26,20) étant reliées électriquement respectivement à la sortie (4) du commutateur émetteur (C) et à la sortie (20) du commutateur récepteur (D), caractérisé en ce que commutateur récepteur (D), d'une part, est doté d'une sortie à valeurs discrètes de tension et est associé à un générateur récepteur de tensions (G) à valeurs discrètes, et, d'autre part, est relié par une liaison mécanique (21) audit moteur (109), en ce qu'un générateur de tension de référence (H) est monté dans la ligne d'alimentation (29) allant de la sortie (4) à valeurs discrètes de tension du commutateur émetteur (E) à l'entrée d'analyse (26) de l'amplificateur (24) concerné, en étant logé dans l'unité de positionnement (103, 104), pour générer une tension de référence pour une valeur fictive (12) de sortie du commutateur émetteur (C) et entrainer l'organe mobile (116) dans une position déterminée par l'intermédiaire du moteur (109), et en ce que, pour obtention de ladite valeur fictive (12) de sortie du commutateur émetteur (C) ledit générateur émetteur (E) génère n valeurs discrètes de tension de sortie, tandis que ledit générateur récepteur (G) génère n + 1 valeurs discrètes de tension de sortie, ladite valeur fictive correspondant à une position dudit commutateur émetteur (C) pour laquelle aucune liaison n'existe entre ledit commutateur émetteur (C) et ledit générateur emetteur (E).

2. Dispositif selon la revendication 1, caractérisé en ce que lesdits générateurs émetteur (E) et récepteur (G) consistent en des ponts diviseurs de tension, et en ce que le générateur émetteur (E) possède une résistance de moins que le générateur récepteur (G).

3. Dispositif selon la revendication 1 ou 2, dans lequel les commutateurs émetteur (C) et récepteur (D) consistent en des commutateurs rotatifs à plots de contact (8 à 12) et (14 à 18) et comportant chacun un curseur rotatif (13,19) se déplacant d'un plot à l'autre, caractérisé en ce que le générateur émetteur (E) possède n sorties reliées chacune à l'un des plots du commutateur emetteur (C) et en ce que le commutateur émetteur (c) possède n + 1 plots de sorties, l'un desdits plots (12) étant fictif en n'étant pas relié à l'une des sorties du générateur émetteur (E).

4. Dispositif selon la revendication 3, caractérisé en ce que l'un des plots du commutateur récepteur (G) est relié à une résistance supplémentaire déterminée (R11) que possède le pont diviseur de tension (G) par rapport au pont diviseur de tension (E).

5. Dispositif selon la revendications 3 ou 4, caractérisé en ce que le curseur (19) du commutateur récepteur (D) est entraîné par le moteur (109) par l'intermédiaire d'un réducteur (R) à roue et vis sans fin et d'une roue (112) entraînant en rotation une pièce (120) portant ledit curseur (19) adapté à coopérer avec des plots de contact portés par une plaque (121), ainsi qu'une tige (116) formant l'organe mobile.

6. Dispositif selon l'une quelconque des revendications 3 à 5, caractérisé en ce que le générateur de tension de référence (H) consiste en un pont diviseur de tension qui est relié par l'intermédiaire du curseur (13) du commutateur emetteur (C) au plot fictif (12) dudit commutateur.

7. Dispositif selon l'une quelconque des revendications 1 à 6 dans lequel deux unités de positionnement (103,104) montées en parallèle sont prévues, caractérisé en ce que des diodes d'isolement (30,31) sont montées chacune dans les lignes d'alimentation (29) entre le générateur de tension de référence (H) et la sortie (4) du commutateur émetteur (C).

8. Dispositif selon l'une quelconque des revendications 1 à 7, dans lequel les amplificateurs différentiels à gain (24,25) consistent en des amplificateurs opérationnels (24,25) à gain, dont l'entrée inverseuse de chacun est reliée à l'entrée d'analyse (26,20) de l'autre amplificateur, caractérisé en ce que des résistances (R23,R20) sont prévues pour mémoriser le sens de rotation dudit moteur (109), l'une (R23) des résistances relie l'entrée non inverseuse de l'un (25) des amplificateurs à l'une (22) des bornes dudit moteur (109) tandis que l'autre (R20) des résistances relie l'entrée non inverseuse de l'autre (24) des amplificateurs à l'autre borne (23) dudit moteur (109).

9. Dispositif selon les revendications 2 et 8, dans lequel les gains des amplificateurs sont obtenus à la faveur de résistances (R27,R21,R26,R23,R20) caractérisé en ce que lesdites résistances (R27,R21,R26,R23,R20) comportent lesdites résistances (R23,R20) de mémorisation du sens de rotation du moteur et en ce que lesdites résistances ont des valeurs supérieures à celles prévues pour lesdits générateurs emetteur (E) et récepteur (G).

## Claims

1. A control system for controlling the position of at least one movable member (116) selectively among a group of discrete positions, in particular for the inclination of a headlamp (100, 101) of a motor vehicle, being of the type comprising a switching unit (102) having several discrete positions and three outputs, supplied by a voltage source, together with a positioning unit (103, 104) associated with the said movable member or members (116) and comprising a direct current motor (109) coupled mechanically to the movable member (116) and electrically to the switching unit (102), through an electronic circuit extending into the positioning unit (103, 104), the said electronic circuit including a receptor switch (D) having an output (20), associated with a voltage receiving generator (G) which is supplied by the voltage source from two outputs (1, 2) of the switching unit (102), while the switching unit (102) has an emitter switch (C) having an output (4) for discrete voltage values associated with a generator (E) for emitting voltages of discrete values and supplied by the voltage source, wherein the output (4) of the emitter switch (C) is connected to the third output (3) of the switching unit (102), which is itself connected to the output (20) of the receptor switch (D) through an electrical circuit comprising, within the positioning unit (103, 104), two differential gain amplifiers (24, 25) connected in back-to-back relationship, with each of the latter having an analysis input (26, 20) connected to the other amplifier for supplying the motor (109), the said analysis inputs (26, 20) being connected electrically to the output (4) of the emitter switch (C) and to the output (20) of the receptor switch (D) respectively, characterised in that the receptor switch (D) is, firstly, provided with an output for discrete voltage values and is associated with a generator (G) for receiving voltages of discrete values, and secondly, connected through a mechanical coupling means (21) to the said motor (109), in that a reference voltage generator (H) is connected in the supply line (29) going from the discrete voltage value output (4) of the emitter switch (E) to the analysis input (26) of the amplifier (24) concerned, being arranged within the positioning unit (103, 104), so as to generate a reference voltage for a notional output value (12) of the emitter switch (C) and to drive the movable member (116) into a predetermined position by means of the motor (109), and in that, in order that the said notional output value (12) of the emitter switch (C) shall be obtained, the said emitter generator (E) generates n discrete values of output voltage, while the said receiver generator (G) generates n + 1 discrete values of output voltage, the said notional value corresponding to a position of the said emitter switch (C) in which there is no connection between the said emitter switch (C) and the said emitter generator (E).

2. A system according to Claim 1, characterised in that the said emitter generator (E) and receiver generator (G) comprise voltage divider bridges, and in that the emitter generator (E) has a lower resistance than the receiver generator (G).

3. A system according to Claim 1 or Claim 2, in which the emitter switch (C) and receptor switch (D) consist of rotary switches having switch contacts (8 to 12) and (14 to 18), with each of them having a rotary cursor (13, 19) which is displaceable from one contact to another, characterised in that the emitter generator (E) has n outputs, each of which is connected to one of the contacts of the emitter switch (C), and in that the emitter switch (C) has n + 1 output contacts, with one of the said contacts (12) being notional and not being connected to one of the outputs of the emitter generator (E).

4. A system according to Claim 3, characterised in that one of the contacts of the receptor switch (D) is connected to a predetermined supplementary resistance (R11) which the voltage divider bridge (G) has as compared to the voltage divider bridge (E).

5. A system according to Claim 3 or Claim 4, characterised in that the cursor (19) of the receptor switch (D) is driven by the motor (109) through a speed reducer (R) of the worm and worm wheel type, and through a wheel (112) which drives in rotation a member (120) that carries the said cursor (19) which is adapted to cooperate with switch contacts carried by a plate (121), together with a rod (116) constituting the movable member.

6. A system according to any one of Claims 3 to 5, characterised in that the reference voltage generator (H) comprises a voltage divider bridge which is connected through the cursor (13) of the emitter switch (C) to the notional contact (12) of the said switch.

7. A system according to any one of Claims 1 to 6 in which two positioning units (103, 104), connected in parallel, are provided, characterised in that an isolating diode (30, 31) is connected in each of the supply lines (29) between the reference voltage generator (H) and the output (4) of the emitter switch (C).

8. A system according to any one of Claims 1 to 7, in which the differential gain amplifiers (24, 25) consist of operational gain amplifiers (24, 25), the inverting input of each of which is connected to the analysis input (26, 20) of the other amplifier, characterised in that resistors (R23, R20) are provided for memorising the direction of rotation of the said motor (109), and one of the resistors (R23) connects the non-inverting input of one of the amplifiers (25) to one of the terminals (22) of the said motor (109), while the other (R20) of the resistors connects the non-inverting input of the other amplifier (24) to the other terminal (23) of the motor (109).

9. A system according to Claims 2 and 8, in which the gains of the amplifiers are obtained by means of resistors (R27, R21, R26, R23, R20), characterised in that the said resistors (R27, R21, R26, R23, R20) include the said resistors (R23, R20) for memorising the direction of rotation of the motor, and in that the said resistors have values greater than those provided for the said emitter generator (E) and receiver generator (G).

## Patentansprüche

1. Positionssteuereinrichtung zur Lageregelung wenigstens eines beweglichen Organs (116) in verschiedene diskrete Stellungen, speziell für die Neigung von Automobilscheinwerfern (100, 101), enthaltend eine Schalteinheit (102) mit mehreren diskreten Positionen und drei Ausgängen, gespeist durch eine Spannungsquelle, und, verbunden mit dem oder den genannten beweglichen Organ(en) (116), eine Positioniereinheit (103, 104) mit einem Gleichstrommotor (109), der mechanisch mit dem beweglichen Organ (116) und elektrisch mit der Schalteinheit (102) über einen elektronischen Schaltkreis verbunden ist, der sich in die Positioniereinheit (103, 104) erstreckt, wobei der genannte elektronische Schaltkreis einen Empfangsschalter (D) aufweist, der mit einem Ausgang (20) versehen und mit einem Empfangsspannungsgenerator (G) verbunden ist, der durch die Spannungsquelle von den beiden Ausgängen (1, 2) der Schalteinheit (102) aus gespeist wird, während die Schalteinheit (102) einen Sendeschalter (C) aufweist, der mit einem Ausgang (4) mit diskreten Spannungswerten versehen und mit einem Sendespannungsgenerator (E) für diskrete Werte verbunden ist, der durch die Spannungsquelle gespeist wird, wobei der Ausgang (4) des Sendeschalters (C) der Vorrichtung mit dem dritten Ausgang (3) der Schalteinheit (10) verbunden ist, die ihrerseits mit dem Ausgang (20) des Empfangsschalters (D) durch einen Stromkreis verbunden ist, der in der Positioniereinheit (103, 104) zwei Differentialverstärker (24, 25) enthält, die in entgegengesetzter Richtung geschaltet sind und jeweils einen Analyseeingang (26, 20) besitzen, der mit dem anderen Verstärker zur Versorgung des Motors (109) verbunden ist, während die genannten Analyseausgänge (26, 20) elektrisch mit dem Ausgang (4) des Sendeschalters (C) bzw. dem Austritt (20) des Empfangsschalters (D) verbunden sind, **dadurch gekennzeichnet,** daß der Empfangsschalter (D) einerseits mit einem Ausgang für diskrete Spannungswerte versehen und mit einem Empfangsspannungsgenerator (G) für diskrete Werte ausgerüstet ist und andererseits über eine mechanische Verbindung (21) mit dem genannten Motor (109) verbunden ist, daß in der Speiseleitung (29) vom Ausgang (4) mit diskreten Spannungswerten des Sendeschalters (E) zum Analyseeingang (26) des betreffenden Verstärkers (24) ein Bezugsspannungsgenerator (H) eingebaut ist, der sich in der Positioniereinheit (103, 104) befindet, um eine Bezugsspannung für einen fiktiven Ausgangswert (12) des Sendeschalters (C) zu erzeugen und das bewegliche Organ (116) durch den Motor (109) in eine bestimmte Position bringen zu lassen, und daß zur Erzeugung des genannten fiktiven Ausgangswerts (12) des Sendeschalters (C) der genannte Sendegenerator (E) n diskrete Ausgangsspannungswerte erzeugt, während der genannte Empfangsgenerator (G) n + 1 diskrete Ausgangsspannungswerte erzeugt, wobei der genannte fiktive Wert einer Position des genannten Sendeschalters (C) entspricht, für die keine Verbindung zwischen dem genannten Sendeschaiter (C) und dem genannten Sendegenerator (E) besteht.

2. Einrichtung nach Anspruch 1, **dadurch gekennzeichnet,** daß der genannte Sendegenerator (E) und Empfangsgenerator (G) aus zwei Spannungsteilerbrücken bestehen und daß der Sendegenerator (E) einen geringeren Widerstand aufweist als der Empfangsgenerator (G).

3. Einrichtung nach Anspruch 1 oder 2, bei der der Sendeschalter (C) und der Empfangsschalter (D) aus Drehschaltern mit Kontaktstiften (8 bis 12) und (14 bis 18) bestehen und jeweils einen Drehkontakt (13, 19) aufweisen, der von einem Stift zum anderen bewegt wird, **dadurch gekennzeichnet,** daß der Sendegenerator (E) n Ausgänge besitzt, die jeweils mit einem der Stifte des Sendeschalters (C) verbunden sind, und daß der Sendeschalter (C) n + 1 Ausgangsstifte besitzt, wobei einer der genannten Stifte (12) fiktiv und nicht mit einem der Ausgänge des Sendegenerators (E) verbunden ist.

4. Einrichtung nach Anspruch 3, **dadurch gekennzeichnet,** daß einer der Stifte des Empfangsschalters (G) mit einem bestimmten Zusatzwiderstand (R11) verbunden ist, den die Spannungsteilerbrücke (G) im Verhältnis zur Spannungsteilerbrücke (E) aufweist.

5. Einrichtung nach Anspruch 3 oder 4, **dadurch gekennzeichnet,** daß der Gleitkontakt (19) des Empfangsschalters (D) durch den Motor (109) mit Hilfe einer Räder- und Schneckenuntersetzung (R) und eines Rades (112) angetrieben wird, wodurch ein Element (120) gedreht wird, welches den genannten Gleitkontakt (19) trägt, der geeignet ist, mit Kontaktstiften zusammenzuwirken, welche von einer Platte (121) getragen werden, sowie mit einer als bewegliches Organ dienenden Stange (116).

6. Einrichtung nach einem der Ansprüche 3 bis 5, **dadurch gekennzeichnet,** daß der Bezugsspannungsgenerator (H) aus einer Spannungsteilerbrücke besteht, die über den Gleitkontakt (13) des Sendeschalters (C) mit dem Blindstift (12) des genannten Schalters verbunden ist.

7. Einrichtung nach einem der Ansprüche 1 bis 6, bei der zwei parallelgeschaltete Positioniereinheiten (103, 104) vorgesehen sind, **dadurch gekennzeichnet,** daß in den Speiseleitungen (29) zwischen dem Bezugsspannungsgenerator (H) und dem Ausgang (4) des Sendeschalters (C) jeweils Trenndioden (30, 31) eingebaut sind.

8. Einrichtung nach einem der Ansprüche 1 bis 7, bei der die Differentialverstärker (24, 25) aus Operationsverstärkern (24, 25) bestehen, deren jeweiliger Umkehreingang mit dem Analyseeingang (26, 20) des anderen Verstärkers verbunden ist, **dadurch gekennzeichnet,** daß Widerstände (R23, R20) vorgesehen sind, um die Drehrichtung des genannten Motors (109) zu speichern, wobei der eine Widerstand (R23) den Nicht-Umkehr-Eingang des einen (25) Verstärkers mit der einen Klemme (22) des genannten Motors (109) verbindet, während der andere Widerstand (R20) den Nicht-Umkehr-Eingang des anderen Verstärkers (24) mit der anderen Klemme (23) des genannten Motors (109) verbindet.

9. Einrichtung nach Anspruch 2 und 8, bei der die Verstärkungen durch Widerstände (R27, R21, R26, R23, R20) bewirkt werden, **dadurch gekennzeichnet,** daß die genannten Widerstände (R27, R21, R26, R23, R20) die genannten Widerstände (R23, R20) zur Speicherung der Motordrehrichtung enthalten und daß die genannten Widerstände höhere Werte aufweisen als sie für den genannten Sendegenerator (E) und den genannten Empfangsgenerator (G) vorgesehen sind.
